# EUROPÄISCHE PATENTANMELDUNG

(11) **EP 4 648 252 A1**
(43) Veröffentlichungstag der Anmeldung: **12.11.2025**
(21) Anmeldenummer: 24174983.7
(22) Anmeldetag: 08.05.2024
(51) Int. Cl.: H02J 7/00, H02J 9/06

(54) **USV-BAUGRUPPE, USV-BAUGRUPPEN-BAUSATZ, SCHALTSCHRANKLOSES AUTOMATISIERUNGSSYSTEM UND VERWENDUNG EINES AKKUMULATORS FÜR HANDWERKZEUGE IN EINER USV-BAUGRUPPE**

(71) Anmelder: Murrelektronik GmbH, 71570 Oppenweiler (DE)
(72) Erfinder: Aumüller, Jan, 71570 Oppenweiler (DE)
(74) Vertreter: Prinz & Partner mbB

(57) **Zusammenfassung**

Die Erfindung betrifft eine USV-Baugruppe (16) für ein schaltschrankloses Automatisierungssystem (10), umfassend ein Gehäuse (26), eine USV-Elektronik (28), die im Gehäuse (26) angeordnet ist, einen Energiespeicher (30) und eine Aufnahme (32) für den Energiespeicher (30), die im oder am Gehäuse (26) angeordnet ist. Die USV-Baugruppe (16) weist eine Systemsteckverbindungskomponente (20) zur mechanischen und/oder elektrischen Anbindung an das schaltschranklose Automatisierungssystem (10) auf. Erfindungsgemäß ist die Aufnahme (32) für den Energiespeicher (30) dazu ausgebildet, den Energiespeicher (30) lösbar im oder am Gehäuse (26) zu fixieren, sodass der Energiespeicher (30) entnehm- und wechselbar ist.

Ferner betrifft die Erfindung einen USV-Baugruppen-Bausatz (44), ein schaltschrankloses Automatisierungssystem (10) und eine Verwendung eines Akkus (34) für Handwerkzeuge in einer USV-Baugruppe (16).

## Beschreibung

Die Erfindung betrifft eine USV-Baugruppe, einen USV-Baugruppen-Bausatz, ein schaltschrankloses Automatisierungssystem und eine Verwendung eines Akkumulators (kurz Akkus) in einer USV-Baugruppe. Insbesondere können in der USV-Baugruppe standardisierte Akkus eingesetzt werden, beispielsweise Akkus für Handwerkzeuge. Insofern liegt die Erfindung grundsätzlich im Bereich der unterbrechungsfreien Stromversorgung (USV).

Viele aus dem Stand der Technik bekannte USV-Geräte und Puffermodule weisen elektrische Energiespeicher auf, beispielsweise Batterien und/oder Akkus, die fest in die jeweiligen Geräte integriert sind. Aus dieser Bauform heraus ergeben sich mehrere Probleme.

Zum einen unterliegt der Transport und die Entsorgung von Geräten mit derartigen Energiespeichern oft besonderen gesetzlichen Vorgaben und Richtlinien. So müssen in vielen Ländern beispielsweise Pakete, die Batterien und/oder Akkus enthalten, besonders gekennzeichnet werden.

Auch die sonstige Handhabung und Verwendung von Geräten mit Batterien und/oder Akkus ist in den meisten Ländern streng reglementiert, in Europa beispielsweise über die RICHTLINIE 2006/66/EG des Europäischen Parlaments und des Rates über Batterien und Akkumulatoren sowie Altbatterien und Altakkumulatoren.

Beholfen wird sich oft damit, dass Batterien und/oder Akkus von spezialisierten Firmen separat von den jeweiligen Einsatzgeräten verschickt und erst am Einbauort in das jeweilige Gerät integriert werden. Dieses zieht jedoch einen erhöhten Zeit- und Organisationsaufwand nach sich.

Ein weiterer Nachteil von USV-Geräten konventioneller Bauart ist, dass für einen Austausch eines veralteten oder defekten elektrischen Energiespeichers das jeweilige Gerät abgeschaltet und geöffnet werden muss. Dies kann im schlimmsten Falle sogar zu einem Anlagenstillstand führen.

Ferner können sowohl die Installation als auch der Austausch von fest verbauten Energiespeichern in der Regel nur von speziell geschultem Personal durchgeführt werden.

Die Aufgabe der Erfindung ist es daher, die aus dem Stand der Technik bekannten Nachteile zu beheben, indem ein technisch einfach aufgebautes und bedienerfreundliches System bereitgestellt wird.

Die Aufgabe wird erfindungsgemäß gelöst durch eine USV-Baugruppe für ein schaltschrankloses Automatisierungssystem, umfassend ein Gehäuse, eine USV-Elektronik, die im Gehäuse angeordnet ist, mindestens einen Energiespeicher und eine Aufnahme für den Energiespeicher, die im oder am Gehäuse angeordnet ist. Erfindungsgemäß weist die USV-Baugruppe eine Systemsteckverbindungskomponente zur mechanischen und/oder elektrischen Anbindung an das schaltschranklose Automatisierungssystem auf. Die Aufnahme für den Energiespeicher ist dazu ausgebildet, den Energiespeicher lösbar im oder am Gehäuse zu fixieren, sodass der Energiespeicher entnehm- und wechselbar ist.

Ein Grundgedanke der Erfindung ist es, eine USV-Baugruppe bereitzustellen, die in ein modulares System, insbesondere Automatisierungssystem, integrierbar ist. Die USV-Baugruppe kann dabei ein Modul des Automatisierungssystems bilden und insbesondere die unterbrechungsfreie Stromversorgung weiterer Module des Systems sicherstellen.

Beispielsweise kann die USV-Baugruppe in Automatisierungssystemen eingesetzt werden, die eine Mehrzahl von Modulen aufweisen, welche auf einer gemeinsamen Basis angeordnet sind.

Die Systemsteckverbindungskomponente schafft hierbei die Möglichkeit, die USV-Baugruppe besonders schnell und technisch unkompliziert an das System anzubinden, insbesondere an die Basis.

Die Basis kann als eine sogenannte "Backplane" ausgebildet sein, also als eine Rückplatte, insbesondere als eine Steckplatte.

Es ist auch denkbar, dass die Basis Kommunikationsleitungen sowie Leiter zum Führen einer Niederspannung und/oder Kleinspannung aufweist, also Leiter zum Führen von Spannungen kleiner gleich 1000 V Wechselspannung und/oder kleiner gleich 1500 V Gleichspannung, insbesondere Leiter zum Führen von Spannungen kleiner gleich 50 V Wechselspannung und/oder kleiner gleich 120 V Gleichspannung.

Die Systemsteckverbindungskomponente ist vorzugsweise dazu ausgebildet, eine Datenverbindung zwischen der USV-Baugruppe und der Basis, insbesondere den Kommunikationsleitungen der Basis, herzustellen und/oder eine elektrische Verbindung zu den klein- und/oder niederspannungsführenden Leitern der Basis herzustellen, wenn die USV-Baugruppe auf die Basis aufgesteckt bzw. in die Basis eingesteckt wird.

Zudem kann der Energiespeicher über die Aufnahme technisch einfach am oder im Gehäuse der USV-Baugruppe fixiert werden, was dessen Installation sowie den Austausch und/oder die Wartung vereinfacht. Insbesondere lässt sich der Energiespeicher in einer bevorzugten Ausführungsform werkzeuglos entnehmen und auswechseln. Die Aufnahme ist hierzu entsprechend ausgebildet. Es ist also nicht notwendig, dass Fachpersonal bzw. speziell geschultes Personal den Energiespeicher wechselt.

Zusammenfassend sind erfindungsgemäß also zwei mechanische Anbindungskomponenten vorgesehen, zum einen die Systemsteckverbindungskomponente zum Integrieren der USV-Baugruppe im System, insbesondere dem schaltschranklosen Automatisierungssystem, und zum anderen die Aufnahme für den Energiespeicher, mittels welcher dieser an der USV-Baugruppe angebunden werden kann. Dadurch ergibt sich der Vorteil, dass die USV-Baugruppe besonders einfach und schnell am Einsatzort installiert, in Betrieb genommen und gewartet werden kann.

Über die Anbindungskomponenten kann eine elektrische Verbindung hergestellt werden, sodass Energie aus dem Energiespeicher über die Aufnahme und die Systemsteckverbindungskomponente an das schaltschranklose Automatisierungssystem übertragen werden kann, um unter anderem Komponenten des schaltschranklosen Automatisierungssystems mit Energie zu versorgen, insbesondere beim Ausfall einer herkömmlichen Stromversorgung.

Optional kann die USV-Baugruppe, insbesondere die Aufnahme und/oder die Systemsteckverbindungskomponente, zusätzliche mechanische Fixierungsmittel umfassen. Beispielsweise kann wenigstens ein Niederhalter und/oder eine Schraubverbindungskomponente vorgesehen sein, um den Energiespeicher an der USV-Baugruppe und/oder die USV-Baugruppe am System, insbesondere der Basis, zusätzlich mechanisch zu sichern. In einer einfachen Ausgestaltung kann es sich bei der Schraubverbindungskomponente um eine Schraube handeln, mit der der Energiespeicher an der USV-Baugruppe bzw. die USV-Baugruppe am System fixiert wird. Dieses Ausführungsvariante ist vorteilhaft, wenn ein werkzeugloser Austausch nicht erwünscht ist, beispielsweise um sich gegen Manipulationen am Energiespeicher oder gegen einen Diebstahl des Energiespeichers abzusichern.

Grundsätzlich kann nur ein Energiespeicher oder auch mehr als ein Energiespeicher in der USV-Baugruppe vorgesehen sein.

In einer Ausführungsvariante ist die Aufnahme dazu ausgebildet, den Energiespeicher derart lösbar im oder am Gehäuse zu fixieren, dass der Energiespeicher während eines laufenden Betriebes der USV-Baugruppe entfernt und/oder ausgetauscht werden kann.

Der Energiespeicher kann also ausgetauscht werden, ohne die USV-Baugruppe abschalten und/oder herunterfahren zu müssen. So wird sichergestellt, dass der Betrieb des Systems, in dem die USV-Baugruppe eine unterbrechungsfreie Stromversorgung gewährleistet, nicht oder nur möglichst wenig beeinträchtigt wird. Dies wird auch als "hot swapping" bzw. "hot plugging" bezeichnet.

Um eine gute Zugänglichkeit bei der Installation zu schaffen, kann vorgesehen sein, dass die Aufnahme für den Energiespeicher und die Systemsteckverbindungskomponente unterschiedlichen Seiten des Gehäuses zugeordnet sind. Insbesondere können die Aufnahme und die Systemsteckverbindungskomponente an entgegengesetzten Seiten des Gehäuses angeordnet sein.

So kann die USV-Baugruppe beispielsweise an einer Gehäuseseite mit dem System, insbesondere Automatisierungssystem, verbunden werden und an der entgegengesetzten Gehäuseseite den Energiespeicher aufnehmen.

In einer Variante der USV-Baugruppe weist die Aufnahme für den Energiespeicher zumindest eine Führung auf, die dazu dient, den Energiespeicher in eine Steckposition zu führen. Durch die Führung kann der Energiespeicher besonders schnell und einfach an die USV-Baugruppe angebunden werden.

Beispielsweise umfasst die Führung eine Führungsnut, in die ein Zapfen am Energiespeicher eingreift. In einer Ausführungsvariante kann die Führung den Energiespeicher mittels der Führungsnut in der Steckposition in zumindest zwei Raumrichtungen fixieren.

In diesem Zusammenhang ist denkbar, dass der Energiespeicher durch eine Bewegung entlang einer Oberfläche des Gehäuses, an der sich die Führungsnut befindet, in die Steckposition eingeschoben wird. Die Führungsnut ist beispielsweise so ausgebildet, dass sie dabei eine Bewegung des Energiespeichers sowohl quer zur Einschubrichtung als auch vom Gehäuse weg unterbindet, wodurch der Energiespeicher beim Anbinden in zwei Raumrichtungen geführt und in der Steckposition in den beiden Raumrichtungen fixiert wird. Der Energiespeicher kann also nur entlang der Einschubrichtung in die Aufnahme eingeschoben bzw. zur Einschubrichtung entgegengesetzt aus der Aufnahme entnommen werden.

Bei der Führung bzw. Führungsnut kann es sich beispielsweise um ein C-, L- oder T-förmiges Profil bzw. um eine entsprechend geformte Vertiefung handeln, die am Gehäuse oder dem Energiespeicher angeordnet ist. Selbstverständlich sind auch mehrere voneinander beabstandete, insbesondere parallel zueinander angeordnete, Nuten und/oder Profile denkbar.

Alternativ kann am Energiespeicher eine Führung bzw. Führungsnut vorgesehen sein, wobei die Aufnahme für den Energiespeicher einen entsprechenden Zapfen aufweist. Die zuvor beschriebenen Ausgestaltungen bzgl. der Führung bzw. Führungsnut der Aufnahme gelten in analoger Weise für die Führung bzw. Führungsnut des Energiespeichers.

In einer bevorzugten Ausführungsvariante ist die zumindest eine Führung der USV-Baugruppe nach dem Poka-Yoke-Prinzip ausgebildet, sodass der Energiespeicher nur in eine definierte Weise in die Aufnahme eingesetzt werden kann. Dadurch ist die Installation und/oder der Austausch des Energiespeichers besonders einfach und fehlerunanfällig. Im Idealfall ist für diese Arbeiten kein speziell geschultes Personal notwendig.

Ferner kann vorgesehen sein, dass die Aufnahme und/oder der Energiespeicher ein Arretierungselement umfasst, das dazu ausgebildet ist, den Energiespeicher in der Steckposition lösbar zu arretieren. Es ist auch denkbar, dass sowohl die Aufnahme als auch der Energiespeicher zueinander korrespondierende Arretierungselemente umfassen. Mittels des Arretierungselementes bzw. der Arretierungselemente kann der Energiespeicher in der Steckposition gegen ein unbeabsichtigtes Herausfallen bzw. Herausrutschen gesichert werden.

In Zusammenhang mit der Führungsnut, insbesondere C-, L- oder T-förmigen Profilen bzw. Vertiefungen, welche den Energiespeicher in der Steckposition in einer ersten und einer zweiten Raumrichtungen fixieren, kann vorgesehen sein, dass das Arretierungselement bzw. die Arretierungselemente den Energiespeicher in einer zur ersten und einer zweiten Raumrichtung senkrechten dritten Raumrichtung fixiert bzw. fixieren.

Es kann auch ein Betätigungselement vorgesehen sein, um das Arretierungselement bzw. die Arretierungselemente zu lösen und den Energiespeicher beispielsweise entgegen der Einschubrichtung entlang der Führung aus der Steckposition zu entfernen.

Alternativ oder zusätzlich kann auch zumindest eine Schraube zur Arretierung genutzt werden. In diesem Falle können insbesondere Bohrungen oder Gewindelöcher in oder an der Aufnahme und/oder dem Energiespeicher vorgesehen sein, in welche die zumindest eine Schraube eingreifen kann. Mit anderen Worten kann das Arretierungselement also als Schraubverbindungskomponente ausgebildet sein.

In einer weiteren Ausführungsform ist der Energiespeicher eine Batterie, insbesondere ein Akku, der zur unmittelbaren Anbindung in oder an einem Handwerkzeug und zum Betrieb des Handwerkzeuges geeignet ist. Vereinfacht ausgedrückt können als Energiespeicher konventionelle Akkus, wie sie beispielsweise aus Akkuschraubern, Akku-Multifunktionswerkzeugen, akkubetriebenen Rasenmähern, kabellosen elektrischen Stichsägen oder kabellosen elektrischen Kettensägen bekannt sind, eingesetzt werden.

Wie sich gezeigt hat, weisen derartige Akkus ein ausreichendes Speicherpotenzial und geeignetes Ansprechverhalten zum Einsatz in der USV-Baugruppe auf.

Außerdem sind die Akkus von Handwerkzeugen typischerweise hinsichtlich ihrer Funktion und Sicherheit in der Entwicklung ausgereift, kostengünstig und schnell verfügbar. Beispielsweise können entsprechende Akkus einfach von einem nahegelegenen Baumarkt bezogen werden. Es muss für einen Austausch nicht erst auf eine Lieferung spezieller passender Ersatzteile gewartet werden.

In einer weiteren Variante der erfindungsgemäßen USV-Baugruppe ist die Aufnahme für den Energiespeicher ein austauschbarer Adapter, der dazu ausgebildet ist, den Energiespeicher elektrisch an die USV-Elektronik anzubinden und/oder mechanisch an das Gehäuse anzubinden.

Dadurch ist es möglich, unterschiedliche Akkus, insbesondere verschiedener Hersteller, in der USV-Baugruppe einzusetzen. Der Adapter kann beispielsweise an das Gehäuse der USV-Baugruppe lösbar angesteckt oder angeschraubt sein und so einfach ausgetauscht werden. In diesem Zusammenhang ist auch denkbar, dass der Adapter die zuvor erwähnte Führung und/oder Führungsnut bzw. ein Nutgegenstück, das in der Führungsnut geführt werden kann, wie einen Zapfen umfasst.

Alternativ kann auch vorgesehen sein, dass die Aufnahme für den Energiespeicher einen austauschbaren Adapter umfasst, der dazu ausgebildet ist, den Energiespeicher elektrisch an die USV-Elektronik anzubinden und/oder mechanisch an das Gehäuse anzubinden. Mit anderen Worten bildet der Adapter also einen Teil der Aufnahme. So muss zum Anbinden eines anderen Akkutyps nicht die gesamte Aufnahme ausgetauscht werden.

Die Aufgabe der Erfindung wird ferner gelöst durch einen USV-Baugruppen-Bausatz, umfassend eine erfindungsgemäße USV-Baugruppe und eine Mehrzahl unterschiedlicher austauschbarer Adapter, wobei jeder der unterschiedlichen austauschbaren Adapter dazu ausgebildet ist, jeweils einen Energiespeicher eines bestimmten Typs elektrisch an die USV-Elektronik anzubinden und/oder mechanisch an das Gehäuse anzubinden.

Die Vorteile, die zur USV-Baugruppe diskutiert wurden, gelten für den USV-Baugruppen-Bausatz in gleicher Weise.

Durch die unterschiedlichen austauschbaren Adapter ist der USV-Baugruppen-Bausatz flexibel einsetzbar. Wenn für einen auszutauschenden Akku, mit dem die USV-Baugruppe betrieben wird, gerade kein identischer Ersatzakku verfügbar ist, kann einfach der Adapter gewechselt werden und die USV-Baugruppe dann stattdessen mit einem Akku eines anderen bestimmten Typs betrieben werden.

Es ist auch denkbar, dass der USV-Gruppen-Bausatz mehrere Energiespeicher unterschiedlichen Typs umfasst. Die verschiedenen Energiespeicher können beispielsweise eine unterschiedliche Speicherkapazität und/oder unterschiedliche Lade- sowie Entladecharakteristiken aufweisen. Dadurch kann die vom USV-Baugruppen-Bausatz umfasste USV-Baugruppe speziell an die jeweiligen Einsatzbedürfnisse angepasst werden, indem ein für den Betrieb besonders geeigneter Energiespeicher aus der Mehrzahl der Energiespeicher ausgewählt wird.

Die Aufgabe der Erfindung wird außerdem gelöst durch ein schaltschrankloses Automatisierungssystem, umfassend eine Basis und zumindest eine erfindungsgemäße USV-Baugruppe. Die USV-Baugruppe ist dabei über die Systemsteckverbindungskomponente mit der Basis mechanisch und/oder elektrisch verbindbar bzw. verbunden.

Durch den schaltschranklosen Aufbau ist das erfindungsgemäße Automatisierungssystem besonders flexibel einsetzbar. Beispielsweise kann es vergleichsweise einfach in Industrieanlagen integriert werden.

Selbstverständlich gelten dabei die Vorteile, die zur USV-Baugruppe und zum USV-Baugruppen-Bausatz diskutiert wurden, für das schaltschranklose Automatisierungssystem in gleicher Weise.

In einer Ausführungsvariante des erfindungsgemäßen schaltschranklosen Automatisierungssystems ist die Basis als eine Steckplatte zur Aufnahme der USV-Baugruppe sowie weiterer steckbarer Module ausgebildet. Die einzelnen Module inklusive der USV-Baugruppe können insbesondere variabel, also an unterschiedlichen Stellen und/oder in unterschiedlichen Reihenfolgen, auf der Steckplatte angeordnet sein bzw. auf diese aufgesteckt werden. Mittels der Steckplatte können die einzelnen Module und insbesondere auch die USV-Baugruppe schnell und technisch einfach miteinander mechanisch sowie elektrisch zu einem funktionsfähigen System verbunden werden. Die USV-Baugruppe kann dann eine unterbrechungsfreie Stromversorgung für die übrigen Module, insbesondere die auf der Steckplatte angeordneten Module, bereitstellen.

Selbstverständlich kann die Basis des erfindungsgemäßen schaltschranklosen Automatisierungssystems auch die zuvor bereits erwähnten Kommunikationsleitungen sowie Leiter zum Führen einer Niederspannung und/oder Kleinspannung aufweisen.

Die Aufgabe der Erfindung wird ferner gelöst durch die Verwendung eines Akkus für Handwerkzeuge in einer USV-Baugruppe, insbesondere in einer erfindungsgemäßen USV-Baugruppe, als Energiespeicher zum Bereitstellen elektrischer Energie für eine unterbrechungsfreie Stromversorgung.

Auch für diese Verwendung gelten die Vorteile, die zur USV-Baugruppe, zum USV-Baugruppen-Bausatz und zum schaltschranklosen Automatisierungsmodul diskutiert wurden, in gleicher Weise.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung eines erfindungsgemäßen schaltschranklosen Automatisierungssystems gemäß einer beispielhaften Ausführungsform;
- Fig. 2 eine schematische Darstellung einer erfindungsgemäßen USV-Baugruppe einer ersten beispielhaften Ausführungsform; und
- Fig. 3 eine schematische Darstellung eines Ausführungsbeispiels eines USV-Baugruppen-Bausatzes, umfassend eine erfindungsgemäße USV-Baugruppe einer zweiten beispielhaften Ausführungsform.

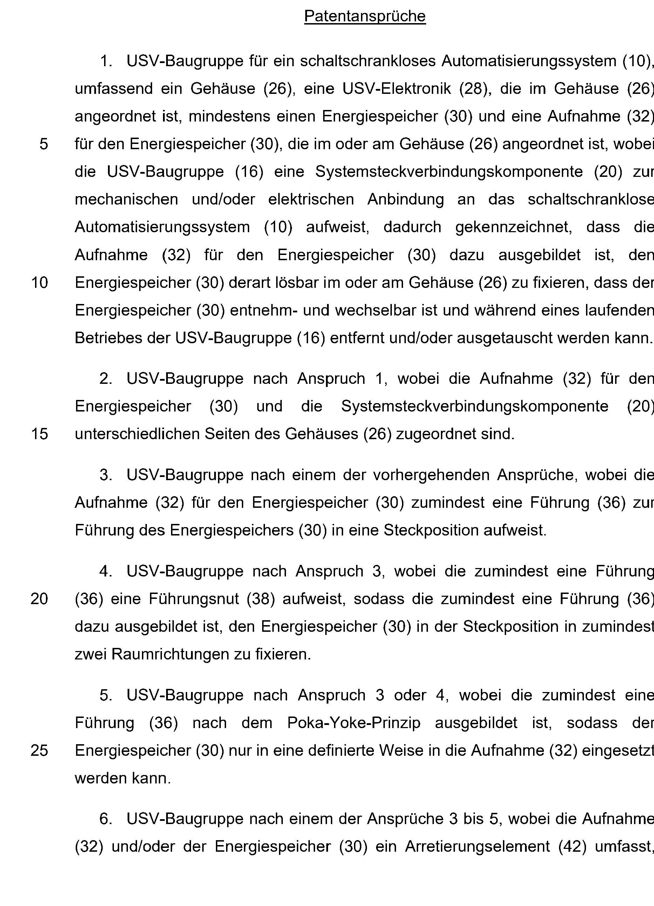

Fig. 1 zeigt schematisch ein Ausführungsbeispiel eines erfindungsgemäßen schaltschranklosen Automatisierungssystems 10. Das schaltschranklose Automatisierungssystem 10 umfasst eine Basis 12 und eine Mehrzahl an Modulen 14. Zumindest eines der Module 14 ist eine erfindungsgemäße USV-Baugruppe 16.

Die Basis 12 ist in der dargestellten Variante als eine Steckplatte 18 ausgebildet.

Die Module 14, insbesondere die USV-Baugruppe 16, weisen jeweils zumindest eine Systemsteckverbindungskomponente 20 auf, mittels der sie mechanisch und elektrisch mit der Basis 12 verbunden sind.

In Fig. 1 sind alle Module 14 mit der Basis 12 durch Steckverbindungen verbunden, die durch die jeweiligen Systemsteckverbindungskomponenten 20 der Module 14 sowie entsprechende Eingriffsgeometrien der Basis 12 gebildet sind. Die Steckverbindungen können beispielsweise durch ineinandergreifende Zapfen und Löcher in den jeweiligen Gegenstücken realisiert sein. Mit anderen Worten können die Systemsteckverbindungskomponenten 20 also als Zapfen und/oder Löcher ausgebildet sein.

Alternativ oder zusätzlich ist auch möglich, dass die Basis 12 einen Rahmen 22 aufweist, in welchen die Module 14 eingesetzt bzw. eingesteckt sind. Die Module 14 können dabei aneinanderliegend angeordnet sein, um sich gegenseitig zu stabilisieren. Alternativ kann aber auch ein Abstand zwischen den einzelnen Modulen 14 vorgesehen sein, insbesondere um eine Wärmeabführung der einzelnen Module 14 zu verbessern. Auch solche Verbindungen sind grundsätzlich als Steckverbindung im Sinne der Erfindung zu verstehen. Die Systemsteckverbindungskomponente 20 der USV-Baugruppe 16 kann in diesen Fällen durch die dreidimensionale Form der USV-Baugruppe 16 selbst gebildet sein.

Auch lassen sich die Steckverbindungen über Buchsen und Steckverbinder realisieren, die gleichzeitig die mechanische Anbindung und elektrische Verbindung sicherstellen.

Selbstverständlich ist die Art der Steckverbindung nicht einschränkend zu verstehen. Viele anderen Steckverbindungstypen sind denkbar.

Die Systemsteckverbindungskomponente 20 der USV-Baugruppe 16 ist im Ausführungsbeispiel dazu ausgebildet, eine Datenverbindung der USV-Baugruppe 16 mit der Basis 12 herzustellen, insbesondere mit in der Basis 12 angeordneten Kommunikationsleitungen.

Außerdem ist die Systemsteckverbindungskomponente 20 der USV-Baugruppe 16 dazu ausgebildet, zumindest eine elektrische Verbindung zur Basis 12 herzustellen, insbesondere zu in der Basis 12 angeordneten elektrischen Leitern, über welche die übrigen Module 14 bei Bedarf mit elektrischer Energie versorgt werden können, insbesondere mit Spannungen im Klein- und/oder Niederspannungsbereich.

Im Ausführungsbeispiel sind die Module 14 und somit auch die USV-Baugruppe 16 zusätzlich mit Niederhaltern 24 an der Basis 12 fixiert, um einen sicheren Halt zu gewährleisten. Die Niederhalter 24 sind in der gezeigten Ausführungsvariante durch flache Vorsprünge an den Ecken des Gehäuses 26 gebildet, in denen sich Schraubenöffnungen befinden. Zum Fixieren an der Basis 12 werden Schrauben in die jeweiligen Schraubenöffnungen eingesetzt und mit der Basis 12 verschraubt.

Fig. 2 zeigt eine schematische dreidimensionale Darstellung einer erfindungsgemäßen USV-Baugruppe 16 einer ersten Ausführungsform, die für einen Einsatz in dem in Fig. 1 gezeigten schaltschranklosen Automatisierungssystem 10 konzipiert ist.

Die USV-Baugruppe 16 umfasst ein Gehäuse 26 und eine USV-Elektronik 28, die im Gehäuse 26 angeordnet ist.

Das Gehäuse 26 ist derart geformt, dass es auf die in Fig. 1 gezeigte Basis 12 aufgesteckt werden kann. Mit anderen Worten bildet zumindest ein Teil des Gehäuses 26 durch seine dreidimensionale Gestaltung also eine Systemsteckverbindungskomponente 20, mit der die USV-Baugruppe 16 mechanisch an die Basis 12 angebunden werden kann. Gleichzeitig kann hierdurch eine elektrische Anbindung realisiert werden.

An der Seite der USV-Baugruppe 16, die dabei mit der Basis 12 in Kontakt gebracht wird (in Fig. 2 die Unterseite), können optional weitere Systemsteckverbindungskomponenten 20 und/oder Fixierungsmittel vorgesehen sein, beispielsweise Zapfen oder Klemmverbindungsgeometrien, wie sie beispielsweise von Klemmbausteinen bekannt sind.

Ferner weist die in Fig. 2 gezeigte USV-Baugruppe 16 einen Energiespeicher 30 und eine Aufnahme 32 für den Energiespeicher 30 auf.

Der Energiespeicher 30 ist ein Akku 34, der grundsätzlich zur unmittelbaren Anbindung in oder an einem Handwerkzeug und zum Betrieb des Handwerkzeuges geeignet ist. Beispielsweise kann es sich um einen Akku 34 eines konventionellen Akkuschraubers handeln.

Insofern wird im Ausführungsbeispiel also ein Akku 34 für Handwerkzeuge in der USV-Baugruppe 16 als Energiespeicher 30 zum Bereitstellen elektrischer Energie für eine unterbrechungsfreie Stromversorgung verwendet.

Alternativ ist auch der Einsatz von Akkus 34 und/oder Batterien anderer, insbesondere im Hobby- und Privatbereich genutzter elektrischer Geräte denkbar, beispielsweise Akkus 34 bzw. Batterien von E-Bikes bzw. Pedelecs. Auch diese Speicher sind im Allgemeinen technisch weit entwickelt, betriebssicher und in breiter Masse verfügbar.

In der in Fig. 2 gezeigten USV-Baugruppe 16 ist die Aufnahme 32 eine Einschuböffnung im Gehäuse 26 und dazu ausgebildet den Energiespeicher 30 lösbar im Gehäuse 26 so zu fixieren, dass der Energiespeicher 30 entnehm- und wechselbar ist, insbesondere werkzeuglos.

Die Aufnahme 32 weist eine Führung 36 auf, mit welcher der Energiespeicher 30 bei der Installation in eine Steckposition geführt werden kann.

Im Ausführungsbeispiel umfasst die Führung 36 eine Führungsnut 38, in welche ein am Energiespeicher 30 vorgesehenes Führungsgegenstück 40 wie ein Zapfen eingreifen kann.

Die Aufnahme 32, insbesondere die Führung 36, ist nach dem Poka-Yoke-Prinzip ausgebildet. Der Energiespeicher 30 kann also nur in eine definierte Weise in die Aufnahme 32 eingesetzt werden, wodurch das Risiko von Fehlern bei der Installation minimiert wird.

Im Ausführungsbeispiel sind an der Aufnahme 32 sowie dem Energiespeicher 30 außerdem zueinander korrespondierende, bzw. ineinandergreifende, Arretierungselemente 42 vorgesehen, die dazu ausgebildet sind, den Energiespeicher 30 in der Steckposition lösbar zu arretieren. Der Energiespeicher 30 kann so in der Steckposition gesichert werden, beispielsweise gegen ein unbeabsichtigtes Lösen infolge von Vibrationen.

Aus der in Fig. 2 gezeigten Ausführungsvariante geht hervor, dass die Aufnahme 32 für den Energiespeicher 30 und der als Systemsteckverbindungskomponente 20 geformte Gehäuseteil entgegengesetzten Seiten des Gehäuses 26 zugeordnet sind. Vereinfacht ausgedrückt befindet sich in Fig. 2 die Aufnahme 32 für den Energiespeicher 30 an der Oberseite, wohingegen sich die Systemsteckverbindungskomponente 20 an der Unterseite der dargestellten USV-Baugruppe 16 befindet. Durch diesen Aufbau wird eine gute Handhabung der USV-Baugruppe 16 bei Wartungsarbeiten und/oder einem Energiespeicher- bzw. Baugruppenaustausch erreicht, da der Energiespeicher 30 leicht zugänglich ist. Beispielsweise muss für einen Austausch des Energiespeichers 30 nicht erst die Systemsteckverbindungskomponente 20 gelöst werden, da die Aufnahme 32 auch dann frei zugänglich ist, wenn die USV-Baugruppe 16 mittels der Systemsteckverbindungskomponente 20 an die Basis 12 des schaltschranklosen Automatisierungssystems 10 angebunden ist.

Insbesondere kann der Energiespeicher 30 auch während eines laufenden Betriebes der USV-Baugruppe 16 entfernt und/oder ausgetauscht werden, was als "hot swapping" bzw. "hot plugging" bezeichnet wird. Dies wird unter anderem durch eine spezielle Ausgestaltung der Aufnahme 32 erreicht, die es ermöglicht, den Energiespeicher 30 derart lösbar im oder am Gehäuse 26 zu fixieren, dass er auch beim laufenden Betrieb aus der Aufnahme 32 entfernt, bzw. in diese eingesetzt werden kann.

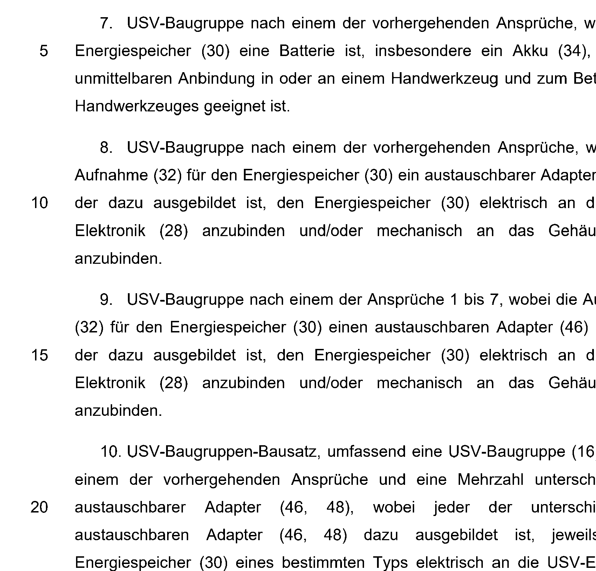

Fig. 3 zeigt eine schematische Darstellung eines Ausführungsbeispiels eines USV-Baugruppen-Bausatzes 44.

Der USV-Baugruppen-Bausatz 44 umfasst eine erfindungsgemäße USV-Baugruppe 16 einer zweiten beispielhaften Ausführungsform.

Diese entspricht im Wesentlichen der in Fig. 2 gezeigten USV-Baugruppe 16, sodass im Folgenden lediglich auf die Unterschiede eingegangen wird. Gleiche und funktionsgleiche Bauteile sind mit den gleichen Bezugszeichen versehen.

Besonders an der in Fig. 3 gezeigten USV-Baugruppe 16 ist, dass die Aufnahme 32 für den Energiespeicher 30 als austauschbarer Adapter 46 ausgebildet ist, mit dem der Energiespeicher 30 elektrisch an die USV-Elektronik 28 sowie mechanisch an das Gehäuse 26 angebunden werden kann.

Alternativ kann die Aufnahme 32 auch einen entsprechenden austauschbaren Adapter 46 umfassen, der dazu ausgebildet ist, den Energiespeicher 30 elektrisch an die USV-Elektronik 28 anzubinden und/oder mechanisch an das Gehäuse 26 anzubinden. Die Aufnahme 32 kann also auch über den Adapter 46 hinausgehende Bestandteile aufweisen, beispielsweise zusätzliche Führungs- oder Sicherungselemente.

In der in Fig. 3 dargestellten Variante der USV-Baugruppe 16 weist die Aufnahme 32 (also der Adapter 46) eine Führung 36 auf, die als C-förmige Führungsnut 38 ausgebildet ist.

Der Energiespeicher 30 umfasst ein T-förmiges Führungsgegenstück 40, welches in die Führung 36 bzw. Führungsnut 38 eingeschoben werden kann.

Die Führung 36 ist im Zusammenspiel mit dem Führungsgegenstück 40 dazu ausgebildet, den Energiespeicher 30 in der Steckposition quer sowie senkrecht zur Einschubrichtung in zwei Raumrichtungen zu fixieren. Dadurch wird der Energiespeicher 30 in der Steckposition sicher gehalten. Optional kann ein Arretierungselement vorgesehen sein, welches den Energiespeicher 30 zusätzlich in Einschubrichtung arretiert.

Neben der USV-Baugruppe 16 und dem von der USV-Baugruppe 16 umfassten Adapter 46 weist der USV-Baugruppen-Bausatz 44 zumindest einen weiteren austauschbaren Adapter 48 auf. Es sind also insgesamt zumindest zwei Adapter 46, 48 vorgesehen.

Die Adapter 46, 48 sind unterschiedlich geformt. Beispielsweise können die Adapter 46, 48 unterschiedliche Führungen 36, insbesondere verschiedene Nutgeometrien, und/oder verschiedene elektrische Anschlüsse 50 aufweisen.

Im Ausführungsbeispiel ist jeder der unterschiedlichen austauschbaren Adapter 46, 48 dazu ausgebildet, jeweils einen Energiespeicher 30 eines bestimmten Typs elektrisch an die USV-Elektronik 28 anzubinden sowie mechanisch an das Gehäuse 26 anzubinden.

Dazu werden mittels der elektrischen Anschlüsse 50 der jeweiligen Adapter 46, 48 elektrische Verbindungen zwischen den jeweiligen Energiespeichern 30 und der USV-Elektronik 28 hergestellt, insbesondere durch eine Kopplung mit weiteren am Gehäuse 26 sowie den Energiespeichern 30 vorgesehenen korrespondierenden elektrischen Anschlüssen 50.

Optional kann der USV-Baugruppen-Bausatz 44 auch mehrere, insbesondere zu den Adaptern 46, 48 passende, Energiespeicher 30 unterschiedlichen Typs umfassen. Zur Vereinfachung ist in Fig. 3 nur ein Energiespeicher 30 dargestellt.

## Patentansprüche

1. USV-Baugruppe für ein schaltschrankloses Automatisierungssystem (10), umfassend ein Gehäuse (26), eine USV-Elektronik (28), die im Gehäuse (26) angeordnet ist, mindestens einen Energiespeicher (30) und eine Aufnahme (32) für den Energiespeicher (30), die im oder am Gehäuse (26) angeordnet ist, wobei die USV-Baugruppe (16) eine Systemsteckverbindungskomponente (20) zur mechanischen und/oder elektrischen Anbindung an das schaltschranklose Automatisierungssystem (10) aufweist, und wobei die Aufnahme (32) für den Energiespeicher (30) dazu ausgebildet ist, den Energiespeicher (30) lösbar im oder am Gehäuse (26) zu fixieren, sodass der Energiespeicher (30) entnehm- und wechselbar ist.

2. USV-Baugruppe nach Anspruch 1, wobei die Aufnahme (32) dazu ausgebildet ist, den Energiespeicher (30) derart lösbar im oder am Gehäuse (26) zu fixieren, dass der Energiespeicher (30) während eines laufenden Betriebes der USV-Baugruppe (16) entfernt und/oder ausgetauscht werden kann.

3. USV-Baugruppe nach Anspruch 1 oder 2, wobei die Aufnahme (32) für den Energiespeicher (30) und die Systemsteckverbindungskomponente (20) unterschiedlichen Seiten des Gehäuses (26) zugeordnet sind.

4. USV-Baugruppe nach einem der vorhergehenden Ansprüche, wobei die Aufnahme (32) für den Energiespeicher (30) zumindest eine Führung (36) zur Führung des Energiespeichers (30) in eine Steckposition aufweist.

5. USV-Baugruppe nach Anspruch 4, wobei die zumindest eine Führung (36) eine Führungsnut (38) aufweist, sodass die zumindest eine Führung (36) dazu ausgebildet ist, den Energiespeicher (30) in der Steckposition in zumindest zwei Raumrichtungen zu fixieren.

6. USV-Baugruppe nach Anspruch 4 oder 5, wobei die zumindest eine Führung (36) nach dem Poka-Yoke-Prinzip ausgebildet ist, sodass der Energiespeicher (30) nur in eine definierte Weise in die Aufnahme (32) eingesetzt werden kann.

7. USV-Baugruppe nach einem der Ansprüche 4 bis 6, wobei die Aufnahme (32) und/oder der Energiespeicher (30) ein Arretierungselement (42) umfasst, das dazu ausgebildet ist, den Energiespeicher (30) in der Steckposition lösbar zu arretieren, insbesondere wobei die Aufnahme (32) und der Energiespeicher (30) zueinander korrespondierende Arretierungselemente (42) umfassen.

8. USV-Baugruppe nach einem der vorhergehenden Ansprüche, wobei der Energiespeicher (30) eine Batterie ist, insbesondere ein Akku (34), der zur unmittelbaren Anbindung in oder an einem Handwerkzeug und zum Betrieb des Handwerkzeuges geeignet ist.

9. USV-Baugruppe nach einem der vorhergehenden Ansprüche, wobei die Aufnahme (32) für den Energiespeicher (30) ein austauschbarer Adapter (46) ist, der dazu ausgebildet ist, den Energiespeicher (30) elektrisch an die USV-Elektronik (28) anzubinden und/oder mechanisch an das Gehäuse (26) anzubinden.

10. USV-Baugruppe nach einem der Ansprüche 1 bis 8, wobei die Aufnahme (32) für den Energiespeicher (30) einen austauschbaren Adapter (46) umfasst, der dazu ausgebildet ist, den Energiespeicher (30) elektrisch an die USV-Elektronik (28) anzubinden und/oder mechanisch an das Gehäuse (26) anzubinden.

11. USV-Baugruppen-Bausatz, umfassend eine USV-Baugruppe (16) gemäß einem der vorhergehenden Ansprüche und eine Mehrzahl unterschiedlicher austauschbarer Adapter (46, 48), wobei jeder der unterschiedlichen austauschbaren Adapter (46, 48) dazu ausgebildet ist, jeweils einen Energiespeicher (30) eines bestimmten Typs elektrisch an die USV-Elektronik (28) anzubinden und/oder mechanisch an das Gehäuse (26) anzubinden.

12. USV-Baugruppen-Bausatz nach Anspruch 11, wobei der USV-Baugruppen-Bausatz (44) zudem mehrere Energiespeicher (30) unterschiedlichen Typs umfasst.

13. Schaltschrankloses Automatisierungssystem, umfassend eine Basis (12) und zumindest eine USV-Baugruppe (16) gemäß einem der Ansprüche 1 bis 10, wobei die USV-Baugruppe (16) über die Systemsteckverbindungskomponente (20) mit der Basis (12) mechanisch und/oder elektrisch verbunden ist.

14. Schaltschrankloses Automatisierungssystem nach Anspruch 13, wobei die Basis (12) als eine Steckplatte (18) zur Aufnahme der USV-Baugruppe (16) sowie weiterer steckbarer Module (14) ausgebildet ist.

15. Verwendung eines Akkus (34) für Handwerkzeuge in einer USV-Baugruppe (16), insbesondere gemäß einem der Ansprüche 1 bis 10, als Energiespeicher (30) zum Bereitstellen elektrischer Energie für eine unterbrechungsfreie Stromversorgung.

## Geänderte Patentansprüche

### Geänderte Patentansprüche gemäss Regel 137(2) EPÜ.

1. USV-Baugruppe für ein schaltschrankloses Automatisierungssystem (10), umfassend ein Gehäuse (26), eine USV-Elektronik (28), die im Gehäuse (26) angeordnet ist, mindestens einen Energiespeicher (30) und eine Aufnahme (32) für den Energiespeicher (30), die im oder am Gehäuse (26) angeordnet ist, wobei die USV-Baugruppe (16) eine Systemsteckverbindungskomponente (20) zur mechanischen und/oder elektrischen Anbindung an das schaltschranklose Automatisierungssystem (10) aufweist, **dadurch gekennzeichnet, dass** die Aufnahme (32) für den Energiespeicher (30) dazu ausgebildet ist, den Energiespeicher (30) derart lösbar im oder am Gehäuse (26) zu fixieren, dass der Energiespeicher (30) entnehm- und wechselbar ist und während eines laufenden Betriebes der USV-Baugruppe (16) entfernt und/oder ausgetauscht werden kann.

2. USV-Baugruppe nach Anspruch 1, wobei die Aufnahme (32) für den Energiespeicher (30) und die Systemsteckverbindungskomponente (20) unterschiedlichen Seiten des Gehäuses (26) zugeordnet sind.

3. USV-Baugruppe nach einem der vorhergehenden Ansprüche, wobei die Aufnahme (32) für den Energiespeicher (30) zumindest eine Führung (36) zur Führung des Energiespeichers (30) in eine Steckposition aufweist.

4. USV-Baugruppe nach Anspruch 3, wobei die zumindest eine Führung (36) eine Führungsnut (38) aufweist, sodass die zumindest eine Führung (36) dazu ausgebildet ist, den Energiespeicher (30) in der Steckposition in zumindest zwei Raumrichtungen zu fixieren.

5. USV-Baugruppe nach Anspruch 3 oder 4, wobei die zumindest eine Führung (36) nach dem Poka-Yoke-Prinzip ausgebildet ist, sodass der Energiespeicher (30) nur in eine definierte Weise in die Aufnahme (32) eingesetzt werden kann.

6. USV-Baugruppe nach einem der Ansprüche 3 bis 5, wobei die Aufnahme (32) und/oder der Energiespeicher (30) ein Arretierungselement (42) umfasst, das dazu ausgebildet ist, den Energiespeicher (30) in der Steckposition lösbar zu arretieren, insbesondere wobei die Aufnahme (32) und der Energiespeicher (30) zueinander korrespondierende Arretierungselemente (42) umfassen.

7. USV-Baugruppe nach einem der vorhergehenden Ansprüche, wobei der Energiespeicher (30) eine Batterie ist, insbesondere ein Akku (34), der zur unmittelbaren Anbindung in oder an einem Handwerkzeug und zum Betrieb des Handwerkzeuges geeignet ist.

8. USV-Baugruppe nach einem der vorhergehenden Ansprüche, wobei die Aufnahme (32) für den Energiespeicher (30) ein austauschbarer Adapter (46) ist, der dazu ausgebildet ist, den Energiespeicher (30) elektrisch an die USV-Elektronik (28) anzubinden und/oder mechanisch an das Gehäuse (26) anzubinden.

9. USV-Baugruppe nach einem der Ansprüche 1 bis 7, wobei die Aufnahme (32) für den Energiespeicher (30) einen austauschbaren Adapter (46) umfasst, der dazu ausgebildet ist, den Energiespeicher (30) elektrisch an die USV-Elektronik (28) anzubinden und/oder mechanisch an das Gehäuse (26) anzubinden.

10. USV-Baugruppen-Bausatz, umfassend eine USV-Baugruppe (16) gemäß einem der vorhergehenden Ansprüche und eine Mehrzahl unterschiedlicher austauschbarer Adapter (46, 48), wobei jeder der unterschiedlichen austauschbaren Adapter (46, 48) dazu ausgebildet ist, jeweils einen Energiespeicher (30) eines bestimmten Typs elektrisch an die USV-Elektronik (28) anzubinden und/oder mechanisch an das Gehäuse (26) anzubinden.

11. USV-Baugruppen-Bausatz nach Anspruch 10, wobei der USV-Baugruppen-Bausatz (44) zudem mehrere Energiespeicher (30) unterschiedlichen Typs umfasst.

12. Schaltschrankloses Automatisierungssystem, umfassend eine Basis (12) und zumindest eine USV-Baugruppe (16) gemäß einem der Ansprüche 1 bis 9, wobei die USV-Baugruppe (16) über die Systemsteckverbindungskomponente (20) mit der Basis (12) mechanisch und/oder elektrisch verbunden ist.

13. Schaltschrankloses Automatisierungssystem nach Anspruch 12, wobei die Basis (12) als eine Steckplatte (18) zur Aufnahme der USV-Baugruppe (16) sowie weiterer steckbarer Module (14) ausgebildet ist.

14. Verwendung eines Akkus (34) für Handwerkzeuge in einer USV-Baugruppe (16), insbesondere gemäß einem der Ansprüche 1 bis 9, als Energiespeicher (30) zum Bereitstellen elektrischer Energie für eine unterbrechungsfreie Stromversorgung.
